# EUROPEAN PATENT APPLICATION

(11) **EP 3 650 725 A1**
(43) Date of publication of application: **13.05.2020**
(21) Application number: 18827517.6
(22) Date of filing: 06.07.2018
(51) Int. Cl.: F16D 65/02, B60T 13/74, F16D 55/226, F16D 65/18, F16D 121/24, F16D 125/28, F16D 125/68

(54) **DISC BRAKE DEVICE**

(30) Priority: 06.07.2017 JP 2017132940
(71) Applicant: Akebono Brake Industry Co., Ltd., Tokyo 103-8534 (JP)
(72) Inventor: MAEHARA, Toshifumi, Tokyo 103-8534 (JP); YOSHIKAWA, Kazuhiro, Tokyo 103-8534 (JP); HAYASHI, Keita, Tokyo 103-8534 (JP); KANEKO, Futoshi, Tokyo 103-8534 (JP); HIRAKOSO, Yukikazu, Tokyo 103-8534 (JP)
(74) Representative: Grünecker Patent- und Rechtsanwälte PartG mbB
(86) International application number: PCT/JP2018/025783
(87) International publication number: WO 2019/009423

(57) **Abstract**

A disc brake device (10) is equipped with an assembly unit (12) comprising one or more components, a body unit (14) comprising one or more components and supported on the assembly unit (12), and a power unit (26) for generating pressing force and/or force for releasing pressure with respect to a brake pad (18) incorporated in the body unit (14), wherein one or more types of the assembly unit (12), one or more types of the body unit (14), and one or more types of the power unit (26) are each interchangeable individually.

## Description

### Technical Field

The present invention relates to a disc brake device, and more particularly to a disc brake device having power other than hydraulic pressure.

### Background Art

A disc brake device is roughly divided into a negative type in which a braking force is always generated via an urging means such as a spring force and the braking is released by another power, and a positive type in which power is operated so as to generate the braking force when braking is required. In addition, conventionally, the power of the disc brake device has been mainly a hydraulic type, but in recent years, there has been a proposal of a device that uses a mechanism that is operated by air or electricity as the power.

Examples of the negative type disc brake device include a type disclosed in Patent Document 1. A disc brake device disclosed in Patent Document 1 is configured to apply a force (pressing force) in a pressing direction to a piston that comes into contact with a brake pad by an action of an operating spring accommodated in a caliper body. Further, as a configuration for releasing the pressing force against the piston, a cam lever is provided, and an actuator for operating the cam lever is attached thereto. In addition, as the actuator, a mechanism that uses a chamber (air cylinder) powered by air, a motor powered by electricity, or the like is disclosed.

Examples of the positive type disc brake device include a type disclosed in Patent Document 2. A disc brake device disclosed in Patent Document 2 is configured to perform a pressing operation of a piston by a cam lever. By rotating the cam lever via an actuator, a force (pressing force) in a pressing direction is applied to a piston that comes into contact with a brake pad. As in Patent Document 1, the actuator is a mechanism that uses an air cylinder, a motor, or the like.

### Citation List

### Patent Document

Patent Document 1: JP-A-2016-166669
Patent Document 2: JP-A-2016-205613

### Summary of Invention

### Technical Problem

Each of the disc brake devices disclosed in Patent Documents 1, 2 described above includes a mechanical power transmission mechanism such as a cam lever. Therefore, it is possible to avoid troubles related to a brake device having a liquid-operated power, such as a liquid leakage or a vapor lock. On the other hand, the number of components forming an internal mechanism is increased as compared with a disc brake device having the liquid-operated power.

For this reason, when performing maintenance or repair, it is necessary to disassemble a mechanism of each part, to inspect components, and to identify and replace the causal component or the like in a case in which there is a failure, and it is expected that a work will require more expertise and technical experience than that of the related art.

However, since such a disc brake device is now used in equipment that is indispensable for people's lives, such as a vehicle, an industrial machine, and a residential environment facility, it is not desirable that a period during which the equipment mounted with the disc brake device is unusable, is prolonged, even for the required maintenance or repair.

Therefore, an object of the present invention is to provide a disc brake device that can improve accuracy of maintenance or repair and can shorten time required for the maintenance or repair in the disc brake device having a power mechanism other than hydraulic pressure.

### Solution to Problem

In order to achieve the above object, a disc brake device according to the present invention has the following configurations.
(1) A disc brake device including:
   an assembly unit including one or more components;
   a body unit including one or more components and supported by the assembly unit; and
   a power unit configured to generate at least one of pressing force and force to release pressing with respect to a brake pad assembled to the body unit,
   wherein one or more types of the assembly unit, one or more types of the body unit, and one or more types of the power unit are replaceable by unit.
(2) The disc brake device according to the above (1),
   wherein an attachment portion of each unit is standardized.
   According to the above configuration, it is possible to easily select and combine the units according to the required structure, design, or performance from the plurality of assembly unit groups, body unit groups, and power unit groups. In addition, it is also easy to confirm a compatibility when assembling each element.
(3) The disc brake device according to the above (1) or (2),
   wherein the power unit includes a casing including an assembly portion to the body unit, an actuator assembled to the casing, and a subunit accommodated inside the casing and configured to amplify an operating force from the actuator.
   According to the above configuration, it is possible to use an actuator having a small operating force, that is, a small-sized actuator. Therefore, an installation space of the disc brake device can be reduced, and a versatility can be improved.
(4) The disc brake device according to the above (3),
   wherein the subunit includes a camshaft, and a cam lever configured to rotate the camshaft, and
   wherein a cam portion of the camshaft is provided with a sliding member covering an entire circumference of the cam portion.
   According to the above configuration, it is possible to increase a resistance of the sliding member with respect to an axial force. In addition, a general-purpose member can be used as the sliding member, and manufacturing cost can also be reduced.
(5) The disc brake device according to the above (4),
   wherein a holder including a piston is inserted through the cam portion of the camshaft.
   According to the above configuration, the piston can be included in the subunit. Therefore, an assembling performance and a maintainability of the disc brake device can be improved.
(6) The disc brake device according to the above (4),
   wherein the camshaft and a piston are arranged in a single holder, and the cam portion presses a reaction force receiver inside the casing so as to move the holder in a pushing direction of the piston.
   According to the above configuration, it is not necessary to fix the camshaft constituting the subunit to the body unit. Therefore, it is not necessary to provide a bearing or the like in the body unit, and a configuration of the accommodating portion can be simplified, and processing cost can be reduced.
(7) The disc brake device according to the above (6), further including:
   an outer holder fixed to the casing on an outer periphery of the holder,
   wherein the reaction force receiver is configured by the outer holder.

   According to the above configuration, the subunit can be fixed to the casing by a method other than support of the camshaft.
(8) The disc brake device according to any one of the above (4) to (7),
   wherein a plurality of the cam levers are arranged with respect to the camshaft.
   According to the above configuration, a contact area between the holder provided with the piston and the camshaft can be increased. Therefore, a reaction force transmitted to the camshaft via the piston can be dispersed, and a proof stress of the camshaft can be increased.
(9) The disc brake device according to any one of the above (4) to (8),
   wherein the camshaft includes support portions at a plurality of points positioned on both side portions of an arranging point of the cam lever.

According to the above configuration, the proof stress of the camshaft with respect to the axial force can be increased.

### Effects of Invention

According to the disc brake device having the above configuration, it is possible to improve the accuracy of maintenance or repair and to shorten time required for the maintenance or repair in a disc brake device having a power mechanism other than hydraulic pressure.

### Brief Description of Drawings

[Fig. 1] Fig. 1 is a block diagram for explaining a basic form of a disc brake device according to the present invention.
[Fig. 2] Fig. 2 is a perspective view of a disc brake device according to a first embodiment of the present invention.
[Fig. 3] Fig. 3 is a view showing an ABCD cross section in Fig. 2.
[Fig. 4] Fig. 4 is a view showing a cross section taken along a line E-E in Fig. 3.
[Fig. 5] Fig. 5 is a perspective view showing a configuration of a subunit in the disc brake device according to the first embodiment of the present invention.
[Fig. 6] Fig. 6 is an exploded perspective view showing the configuration of the subunit in the disc brake device according to the first embodiment of the present invention.
[Fig. 7] Fig. 7 is a perspective view showing a state in which a disc brake device according to a second embodiment of the present invention is disassembled by unit.
[Fig. 8] Fig. 8 is a perspective view of the disc brake device according to the second embodiment of the present invention.
[Fig. 9] Fig. 9 is a view showing an ABCD cross section in Fig. 8.
[Fig. 10] Fig. 10 is an exploded perspective view showing a configuration of a subunit in the disc brake device according to the second embodiment of the present invention.
[Fig. 11] Fig. 11 is a view showing a side cross section (an upper side of a dash-dot line in the drawing is a central cross section, and a lower side of the dash-dot line is a cross section of a cam lever arrangement position) of a disc brake device according to a third embodiment of the present invention.
[Fig. 12] Fig. 12 is an exploded perspective view showing a configuration of a subunit in the disc brake device according to the third embodiment of the present invention (excluding a piston unit portion).
[Fig. 13] Fig. 13 is a view showing a side cross section of a disc brake device according to a fourth embodiment of the present invention.
[Fig. 14] Fig. 14 is a perspective view showing a configuration of a subunit in the disc brake device according to the fourth embodiment of the present invention.
[Fig. 15] Fig. 15 is an exploded perspective view showing the configuration of the subunit in the disc brake device according to the fourth embodiment of the present invention.
[Fig. 16] Fig. 16 is a view showing a side cross section (an upper side of a dash-dot line in the drawing is a cross section of an operation elastic body arrangement position, and a lower side of the dash-dot line is a cross section of a cam lever arrangement position) of a disc brake device according to a fifth embodiment of the present invention.
[Fig. 17] Fig. 17 is a perspective view showing a configuration of a power unit in the disc brake device according to the fifth embodiment of the present invention.
[Fig. 18] Fig. 18 is an exploded perspective view showing a configuration of a subunit in the disc brake device according to the fifth embodiment of the present invention.

### Description of Embodiments

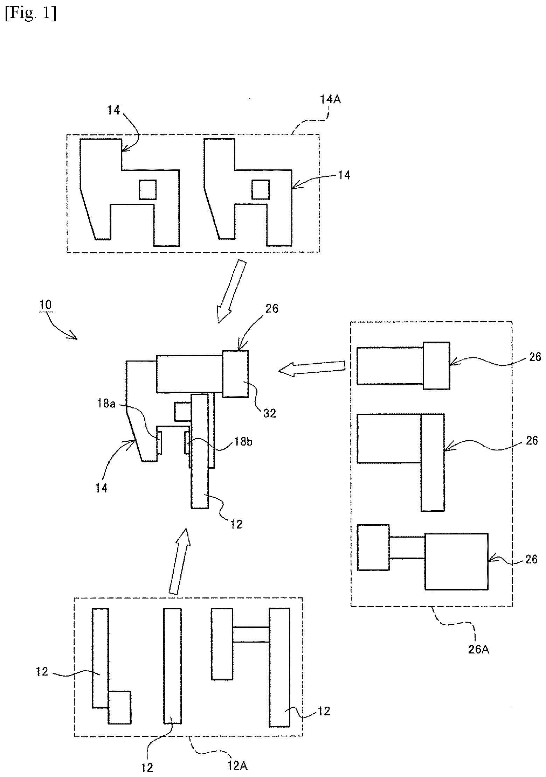

Hereinafter, an embodiment of a disc brake device according to the present invention will be described in detail with reference to the drawings. Fig. 1 is a block diagram for explaining a basic form of a disc brake device according to the present invention. Incidentally, an embodiment, which will be described below, is only a part of a preferred form for carrying out the present invention. Therefore, even when a form such as an appearance, a mechanism, or the like is changed within a range in which the effect can be achieved, the form can be regarded as a part of the present invention.

### [Basic Configuration]

As shown in Fig. 1, a disc brake device 10 according to the present embodiment basically includes an assembly unit 12, a body unit 14, and a power unit 26. The assembly unit 12 is an element playing a role of assembling the disc brake device 10 to a vehicle, an industrial machine, and a residential environment facility (which are not shown), and is an element generally referred to as support.

The body unit 14 is an element that mainly occupies an appearance configuration of the disc brake device 10, and includes at least a brake pad 18 (a claw-side pad 18a, a cylinder-side pad 18b) for sandwiching a rotor (not shown), and a caliper body 16 as a frame for holding the brake pad 18.

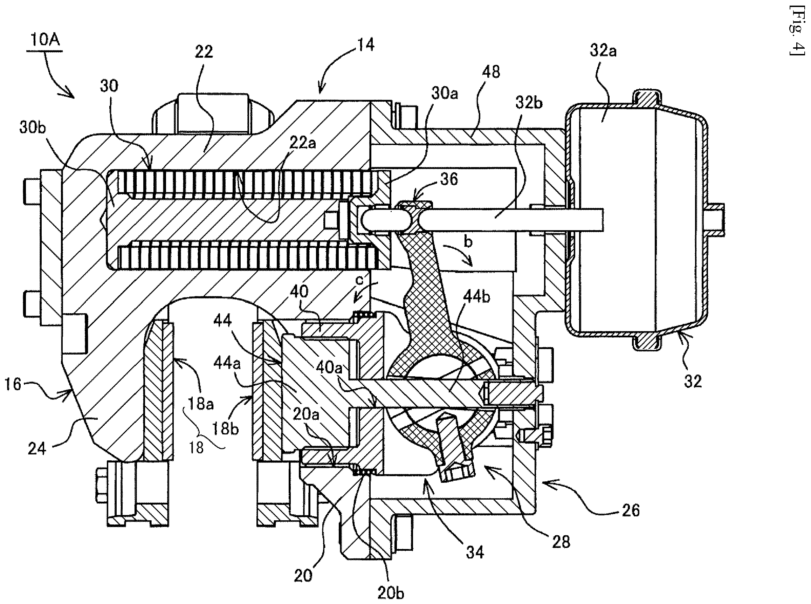

The power unit 26 is an element for pressing the brake pad 18 held by the body unit 14 to generate at least one of a braking force and a force for releasing the braking. Although a specific configuration of the power unit 26 is diverse, the power unit 26 includes at least a piston (piston unit 34: see Fig. 4), a subunit 28 (see Fig. 4) for operating the piston unit 34, and an actuator 32.

In this way, by a configuration in which the elements forming the disc brake device 10 can be divided into a plurality of units, if a corresponding unit is obtained in advance when maintenance or repair is required, the maintenance or repair can be completed only by replacing the unit. Therefore, time required for the maintenance or repair can be shortened. In addition, since the unit to be replaced can be assembled and adjusted by a manufacturer or the like, accuracy of the maintenance or repair is also improved. Further, the unit detached due to the maintenance or repair can be sent back to the manufacturer or the like to perform the time-consuming maintenance or repair.

In the disc brake device 10 according to the present embodiment, an assembly portion among the assembly unit 12, the body unit 14, and the power unit 26, which are the above-described elements, is standardized. By standardizing the assembly portions among the units, the desired disc brake device 10 can be configured by selecting and combining the units according to the required structure, design, or performance from an assembly unit group 12A having different assembling objects, a body unit group 14A having different installation spaces and design, a power unit group 26A having different power performances, or the like.

According to the above configuration, for example, in a case in which vehicle types are different even in a case of the disc brake device 10 for a vehicle, the common body unit 14 can be assembled to the assembly unit 12 designed for each vehicle type. In addition, the body unit 14 having different sizes or design can be assembled to the assembly unit 12 according to an installation space, design, or the like of a wheel to be assembled to an axle. Further, it is also possible to selectively assemble a negative type power unit 26 and a positive type power unit 26 to the body unit 14 having a common or different size and design. As a matter of course, it is also possible to assemble the power units 26 having different power performances according to the required power performance.

According to the disc brake device 10 having such a configuration, the disc brake device 10 configured by selecting each unit is diverse. Therefore, a versatility of the configured disc brake device 10 can be improved.

The basic configuration as described above can be applied to a wide variety of forms. Hereinafter, specific forms will be described, including the respective characteristic configurations.

### [First Embodiment]

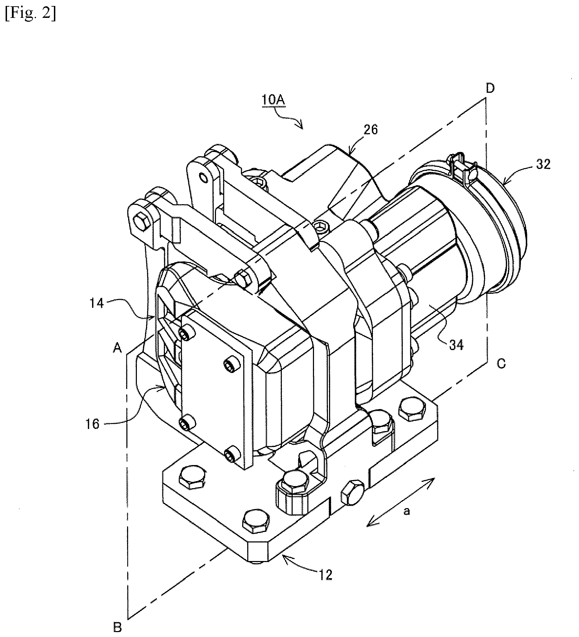

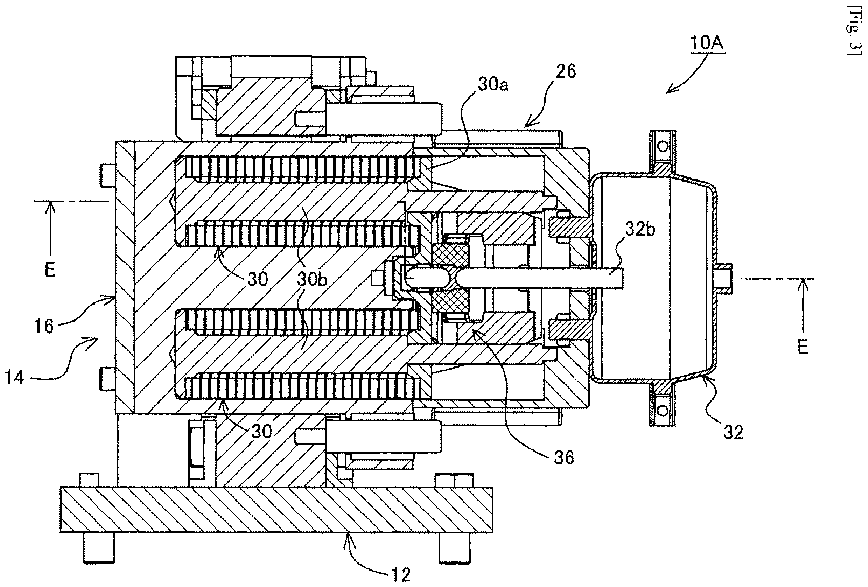

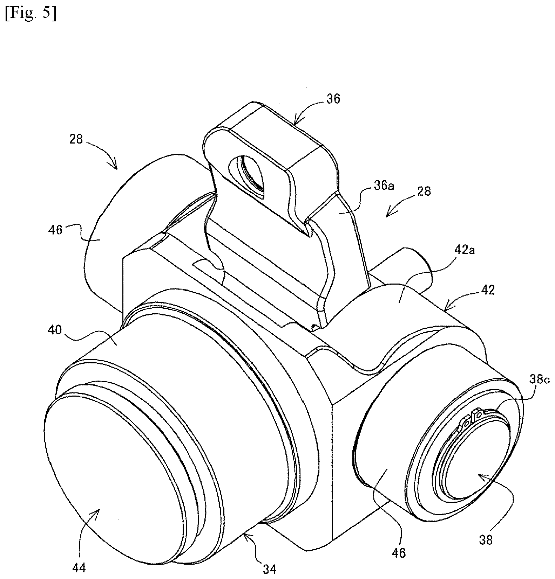

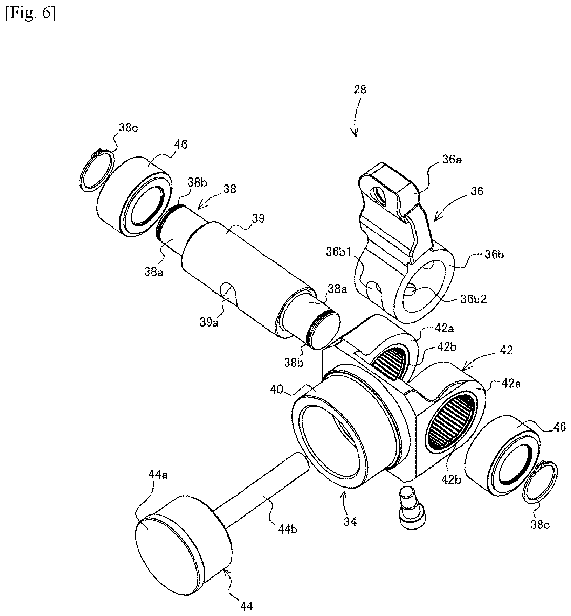

First, a disc brake device according to a first embodiment will be described with reference to Figs. 2 to 6. Incidentally, Fig. 2 is a perspective view of the disc brake device according to the first embodiment of the present invention, and Fig. 3 is a view showing an ABCD cross section in Fig. 2. In addition, Fig. 4 is a view showing a cross section taken along a line E-E in Fig. 3. Fig. 5 is a perspective view showing a configuration of a subunit, and Fig. 6 is an exploded perspective view showing the configuration of the subunit.

A disc brake device 10A according to the present embodiment is a so-called negative type disc brake device. The disc brake device 10A includes the assembly unit 12, the body unit 14, and the power unit 26, similarly to the disc brake device 10 according to the basic form described above.

The support forming the assembly unit 12 is an element for holding the body unit 14 while being fixed to a structure (not shown) such as the industrial machine or the residential environment facility. In the disc brake device 10A according to the first embodiment, the body unit 14 is held so as to slide in an axis direction (direction indicated by an arrow a) of a rotor (not shown) via a slide pin.

The body unit 14 includes the caliper body 16 and the brake pad 18 (the claw-side pad 18a, the cylinder-side pad 18b). The caliper body 16 basically includes a cylinder portion 20, a claw portion 24, and a back portion 22. The cylinder portion 20 is formed with a cylinder 20a for accommodating the piston unit 34 constituting the power unit 26. The cylinder 20a is a hole having an opening with a surface (a side surface on a claw portion 24 side) facing the rotor (not shown) as a tip end. In the caliper body 16 according to the first embodiment, a step portion 20b that acts as a reaction force receiver is formed at a rear end of the cylinder 20a. In addition, a brake pad (hereinafter, referred to as the cylinder-side pad 18b) is arranged in the vicinity of the opening portion of the cylinder 20a on the claw 24 side.

The claw portion 24 is an element as a reaction force receiver arranged to face the cylinder portion 20 via the rotor (not shown). A brake pad (hereinafter, referred to as the claw-side pad 18a) is arranged on an opposite surface side (an opposite surface side facing the cylinder portion 20) facing the rotor in the claw portion 24.

The back portion 22 is an element that connects the cylinder portion 20 and the claw portion 24 across an outer peripheral side of the rotor. The back portion according to the first embodiment is provided with an accommodating portion 22a accommodating a disc spring as an operation elastic body 30 constituting the power unit 26. The accommodating portion 22a is formed as a recessed portion (hole) that is formed with an opening portion on a side where the power unit 26 is assembled and extends in an axial direction of the rotor. In the first embodiment, two accommodating portions 22a are formed in parallel with the back portion 22. This is in order to obtain a pressing force required to generate a braking force while reducing a diameter of the operation elastic body 30 accommodated in the accommodating portion 22a. According to the above configuration, it is not necessary to make the back portion 22 extremely thick. In addition, a technology with the above configuration can contribute to reduction in a size of the disc brake device.

The power unit 26 includes the subunit 28, the operation elastic body 30, the actuator 32, and a casing 48. The subunit 28 is a unit playing a role of amplifying an operating force from the operation elastic body 30 or the actuator 32. The subunit 28 mainly includes the piston unit 34, a cam lever 36, and a camshaft 38. By providing the subunit 28, it is possible to use a small and lightweight one having a small operating force as the operation elastic body 30 or the actuator 32. In addition, according to the configuration including the subunit 28 including the above elements, an assembling performance and a maintainability of the disc brake device can be improved.

The piston unit 34 includes an outer piston 40 and a cam holder 42. The outer piston 40 is formed in a bottomed cylindrical shape, and an outer peripheral side surface thereof is a sliding surface with the cylinder 20a. An inner peripheral side surface of the outer piston 40 is formed with a female screw, and can be screwed with an inner piston 44 forming a pressing surface of the cylinder-side pad 18b. Incidentally, the inner piston 44 includes an inner piston main body 44a forming a pressing surface, and an adjuster portion 44b extending rearward from a rear end (end portion positioned on an opposite side to an end portion on a pressing surface side) of the inner piston main body 44a as a base point.

A through hole 40a is formed in a bottom portion of the outer piston 40, and the adjuster portion 44b of the inner piston 44 can be inserted therethrough. By providing the adjuster portion 44b that penetrates the bottom portion of the outer piston 40 and the cam holder 42, it is possible to adjust a protrusion amount of the inner piston 44 from an outer portion of the piston unit 34.

The cam holder 42 is an element that holds a cam portion 39 of the camshaft 38, which will be described in detail later. The cam holder 42 has a gate type structure including a pair of holding portions 42a with a gap for arranging the cam lever 36 at a center thereof. Further, each of the holding portions 42a is provided with a sliding member 42b (needle bearing in an example shown in Fig. 6) for reducing a rotation resistance of the camshaft 38. Since the cam portion 39 is inserted through the holding portion 42a, the sliding member 42b can cover an entire circumference of the cam portion 39. According to the above configuration, a resistance of the sliding member 42b with respect to an axial force can be increased. In addition, a general-purpose member can be used as the sliding member 42b, and manufacturing cost can also be reduced.

The camshaft 38 includes support portions 38a that is provided at both end portions in a longitudinal direction, and the cam portion 39 that is arranged between the pair of support portions 38a, has a larger diameter than the support portion 38a, and whose a center position is eccentric with respect to a rotation center of the support portion 38a. The cam portion 39 is provided with a through portion 39a for inserting the adjuster portion 44b of the inner piston 44. In the camshaft 38 assembled to the piston unit 34, sliding members 46 such as a bearing are respectively arranged on outer peripheries of the support portions 38a protruding from the holding portions 42a, and the piston unit 34 is sandwiched. According to the above configuration, a sliding resistance when the camshaft 38 is rotated can be reduced, and strength of the support portion 38a having a smaller diameter than the cam portion 39 can be compensated. As a result, a proof stress with respect to the axial force can be increased. Incidentally, in the first embodiment, in order to prevent the sliding member 46 from falling off from the support portion 38a, a groove 38b for providing a retaining ring 38c such as a C-type clip is formed in the vicinity of an end portion of the support portion 38a.

The cam lever 36 includes a lever portion 36a and an engaging portion 36b. The lever portion 36a is an element forming a power point of the cam lever 36. The engaging portion 36b is an element that is fixed in a state in which the cam portion 39 of the camshaft 38 is inserted. The engaging portion 36b is provided with a through portion 36b 1 for inserting the adjuster portion 44b of the inner piston 44. Further, the engaging portion 36b is formed with a fixing hole 36b2 for engaging with the cam portion 39. The cam lever 36 configured as described above functions with a rotation center of the camshaft 38 as a fulcrum, a tip end of the lever portion 36a as the power point, and an outer periphery of the cam portion 39 as an action point. Incidentally, in the present embodiment, the braking force is generated in a case where the cam lever 36 rotates toward an arrow b side, whereas the braking force is released in a case where the cam lever 36 rotates toward an arrow c side.

In the first embodiment, the operation elastic body 30 is one of power for generating the braking force. Specifically, a spring such as the disc spring is stacked and held by a spring guide 30b supported by a spring holder 30a, thereby generating a force that applies a rotational force in a direction indicated by an arrow b to a tip end of the cam lever 36.

In the first embodiment, the actuator 32 is power for generating a force for rotating the cam lever 36 in a direction (a direction indicated by an arrow c) in which the braking force is released. Specifically, the actuator 32 includes an air cylinder 32a and a direct acting rod 32b that operates in accordance with an operation of the air cylinder 32a. The direct acting rod 32b is directly or indirectly connected to the tip end of the cam lever 36, and is configured to press the tip end of the cam lever 36 from a direction different from that of the operation elastic body 30 described above. In such a configuration, the cam lever 36 can be rotated in the direction of the arrow c by an operation of the actuator 32.

The casing 48 is an element that mainly forms a bore that is an accommodation space for the subunit 28. The casing 48 is connected to a rear end side (on an opposite side to a cylinder-side pad 18b arrangement side) of the cylinder 20a of the body unit 14 so as to form an outer shell that covers an upper end of the back portion 22 from a lower end of the cylinder portion 20 in the body unit 14, and the bore is formed therein.

In the disc brake device 10A having the above configuration, the assembly unit 12, the body unit 14, and the power unit 26 can be replaced by unit. In addition, by making the form of the assembly unit 12 different, it is possible to cope with a case in which a structure to be assembled is different. Further, it is possible to assemble the power unit 26 having different power characteristics by making a length of the operation elastic body 30 in the power unit 26, a length of the lever portion 36a in the cam lever 36, or the actuator 32 different.

In the form shown in Figs. 2 to 4, although the actuator 32 is shown as an air-driven type actuator including the air cylinder 32a, the actuator 32 may be driven by electric power, such as a motor, as long as the actuator 32 can generate power for rotating the cam lever 36.

### [Second Embodiment]

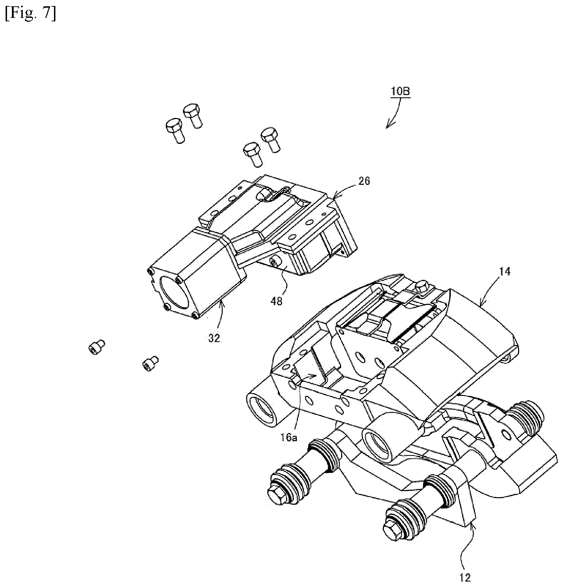

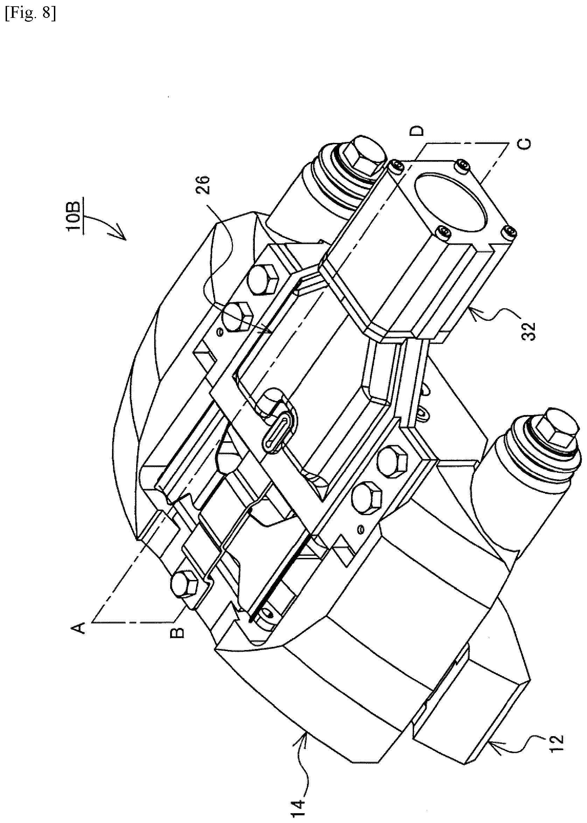

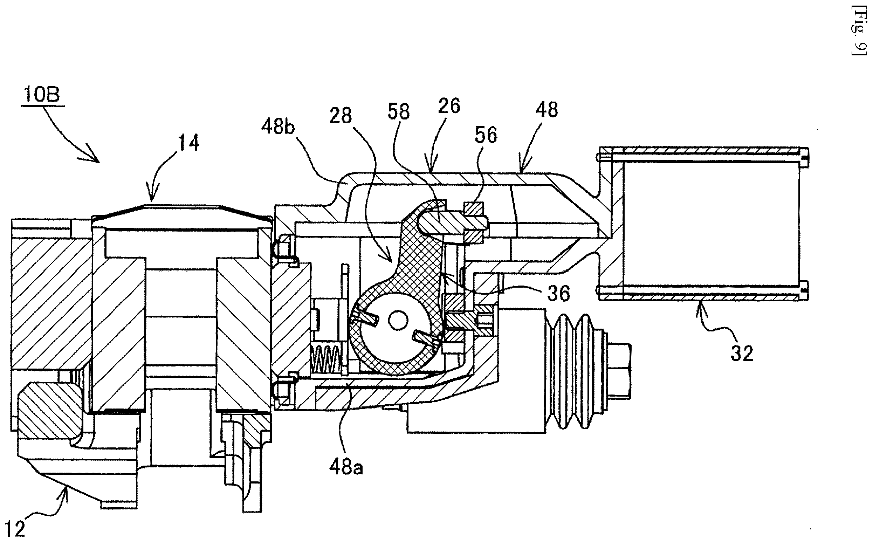

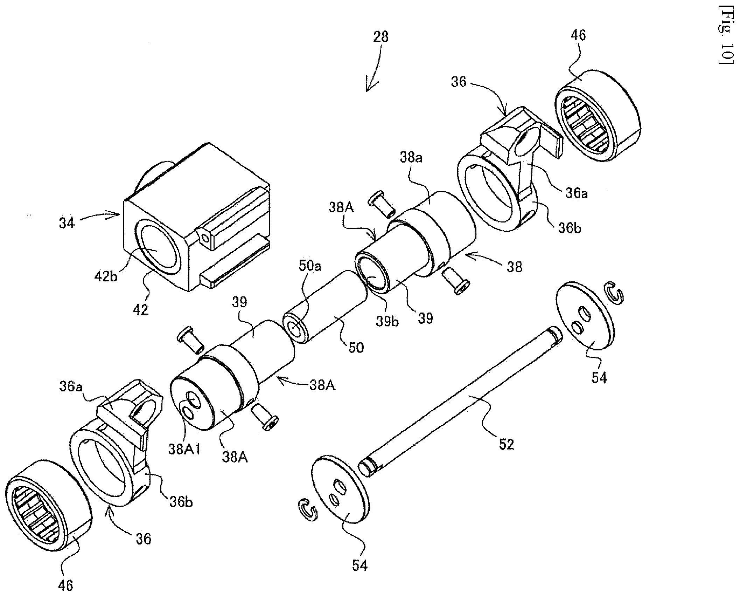

Next, a disc brake device according to a second embodiment of the present invention will be described with reference to Figs. 7 to 10. Incidentally, Fig. 7 is a perspective view showing a state in which the disc brake device according to the second embodiment of the present invention is disassembled by unit, Fig. 8 is a perspective view showing a state in which the disassembled units in Fig. 7 is assembled, and Fig. 9 is a view showing an ABCD cross section in Fig. 8. In addition, Fig. 10 is an exploded perspective view showing a configuration of a subunit according to the second embodiment of the present invention.

Similarly to the disc brake device 10A according to the first embodiment, a disc brake device 10B according to the second embodiment basically includes the assembly unit 12, the body unit 14, and the power unit 26. Therefore, portions having the same functions are denoted by the same reference signs in the drawings, and a detailed description thereof will be omitted. In addition, the disc brake device 10B according to the second embodiment is a so-called positive type disc brake device, and is configured to generate a braking force by an operation of power in the power unit 26.

In the second embodiment, an accommodating portion 16a for assembling the power unit 26, which will be described in detail later, is formed in the caliper body 16 constituting the body unit 14.

The difference from the disc brake device 10A according to the first embodiment is that the operation elastic body 30 is not provided in the power unit 26. Therefore, in the disc brake device 10B according to the second embodiment, the power unit 26 can be configured more compactly as compared with the disc brake device 10A according to the first embodiment.

The power unit 26 according to the second embodiment includes the subunit 28, the actuator 32, and the casing. The subunit 28 includes the piston unit 34, the camshaft 38, and the cam lever 36. Similarly to the piston unit 34 according to the first embodiment, the piston unit 34 according to the second embodiment also includes the cam holder 42 through which the camshaft 38 is inserted. The difference from the piston unit 34 according to the first embodiment is that the cam holder 42 is formed in a block type instead of the gate type. Incidentally, the sliding member 42b may be arranged on an inner peripheral surface of the cam holder 42.

The camshaft 38 according to the second embodiment has a divided structure formed of a plurality of shaft pieces 38A (two in an example shown in Fig. 10), and is configured such that the cam portion 39 has a smaller diameter than the support portion 38a. Therefore, even if the cam holder 42 of the piston unit 34 has a smaller diameter than the support portion 38a, the cam portion 39 of the camshaft 38 can be inserted through the cam holder 42. In addition, holes 39b are respectively formed in cross sections of the cam portions 39 of the two shaft pieces 38A. The hole 39b is provided with a reinforcing member 50 arranged so as to connect the divided shaft pieces 38A. According to the above configuration, it is possible to prevent strength of a joint portion from being lowered and the camshaft 38 from buckling.

In the camshaft 38 according to the second embodiment, through holes 38A1, 50a are formed in the shaft piece 38A and the sliding member 42b, respectively. The through holes 38A1, 50a are provided at positions at which a continuous hole is formed when the camshaft 38 is integrally assembled, and a connecting shaft 52 is inserted through the through holes 38A1, 50a. Stopper plates 54 are engaged with end portions of the connecting shaft 52 that is inserted through the camshaft 38, thereby preventing the connecting shaft 52 from coming off. According to the above configuration, the camshaft 38 having the divided structure can be formed as one unit.

In the second embodiment, the plurality of cam levers 36 (two in the form shown in Fig. 10) are provided, and arranged so as to sandwich the piston unit 34. According to the above configuration, a contact area between the piston unit 34 and the cam portion 39 can be increased as compared with the subunit 28 shown in the first embodiment. As a result, a reaction force of the axial force transmitted to the camshaft 38 via the piston unit 34 can be dispersed, and the proof stress of the camshaft 38 can be increased. In addition, by arranging the plurality of the cam levers 36, a burden on the lever portion 36a when generating the power can be reduced.

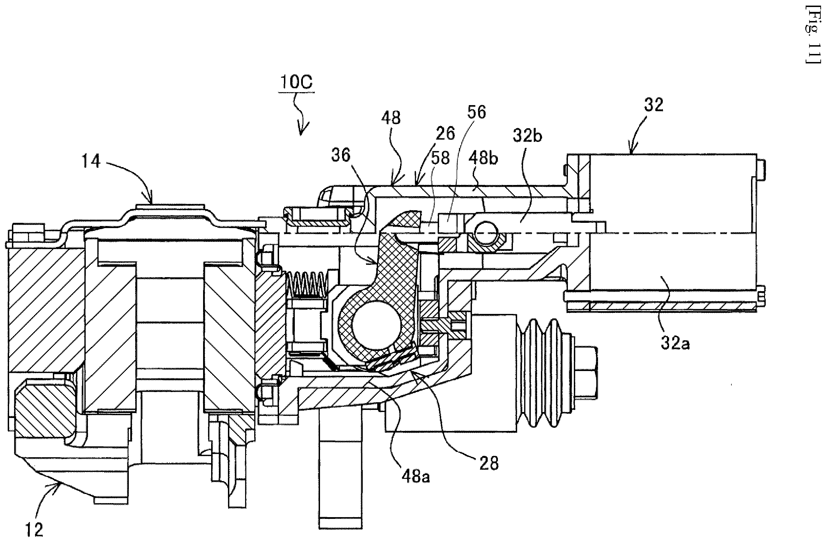

Similarly to the first embodiment, the actuator 32 may be an air operating type actuator including the air cylinder, or may be an electric operating type actuator using the motor. Between the direct acting rod 32b (see Fig. 11) of the actuator 32 and the cam lever 36, a clevis 56 and a rod 58 for transmitting a force from the single direct acting rod 32b to the two cam levers 36 are provided.

Although a shape of the casing 48 is not particularly limited, in the second embodiment, the casing 48 includes a lower casing 48a and an upper casing 48b, and the casing 48 can be assembled to the accommodating portion 16a formed in the caliper body 16.

Even in the disc brake device 10B having the above configuration, the assembly unit 12, the body unit 14, and the power unit 26 can be replaced by unit. In addition, for example, in a case in which an attachment portion of the power unit 26 is standardized, the power units 26 having different configurations can be switched and assembled, as in a third embodiment and a fourth embodiment of the present invention, which will be described in detail later.

### [Third Embodiment]

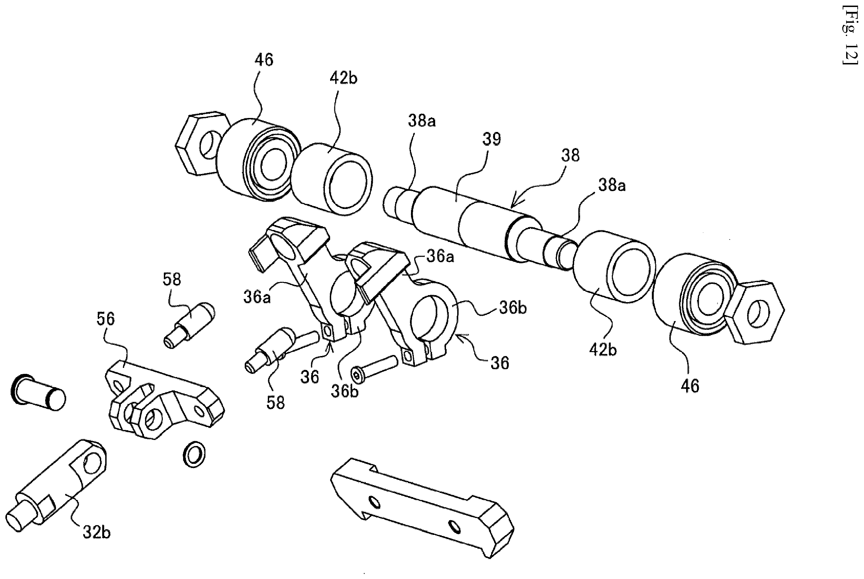

Next, a disc brake device according to the third embodiment of the present invention will be described with reference to Figs. 11 and 12. Incidentally, Fig. 11 is a view showing a side cross section (an upper side of a dash-dot line in the drawing is a central cross section, and a lower side of the dash-dot line is a cross section of a cam lever arrangement position) of the disc brake device according to the third embodiment of the present invention. In addition, Fig. 12 is a view showing a configuration of a portion excluding a piston unit in a subunit according to the third embodiment of the present invention.

A disc brake device 10C according to the third embodiment is configured based on the disc brake device 10B according to the second embodiment, and most of the configurations thereof can be used in common. Therefore, the portions having the same functions are denoted by the same reference signs in the drawings, and a detailed description thereof will be omitted.

The difference between the disc brake device 10C according to the third embodiment and the disc brake device 10B according to the second embodiment is a configuration of the power unit 26. Specifically, in the power unit 26 according to the third embodiment, as shown in Fig. 12, the camshaft 38 is an integrally formed product.

Since the camshaft 38 is the integrally formed product, the number of components forming the subunit 28 can be reduced. On the other hand, in order to insert through the cam holder 42 forming the piston unit 34 (see Fig. 10, for example), it is necessary to form the support portion 38a so as to have a smaller diameter than the cam portion 39. Therefore, the sliding member 46 arranged at the support portion 38a is increased in the diameter, and the strength of the support portion 38a at the time of assembly is improved.

In the disc brake device 10C according to the third embodiment, the casing 48 uses a common member with the disc brake device 10B according to the second embodiment to standardize the attachment portion. According to the above configuration, even in the power unit 26 having different internal configurations and power performances, the power unit 26 can be assembled to the common body unit 14.

Incidentally, other configurations are the same as those of the disc brake device 10B according to the second embodiment described above.

### [Fourth Embodiment]

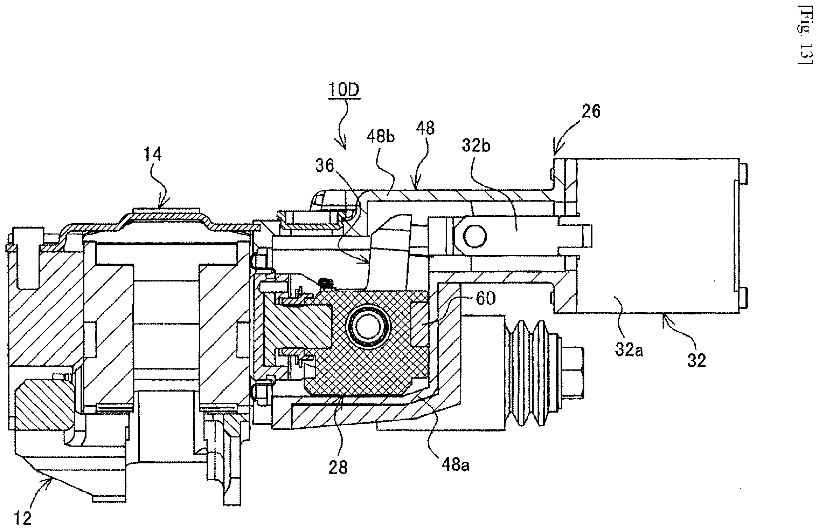

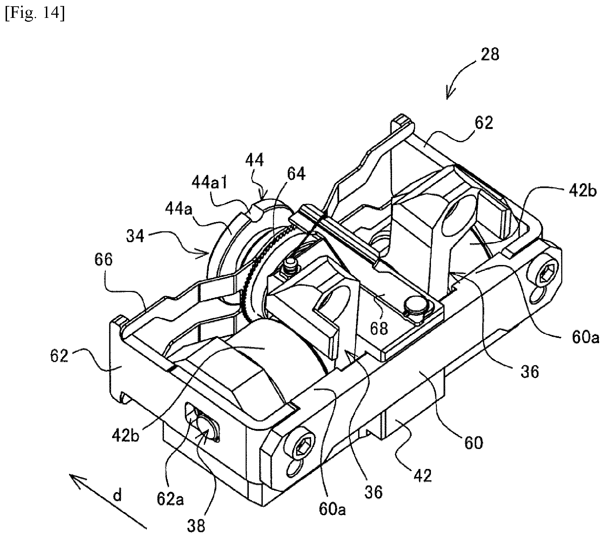

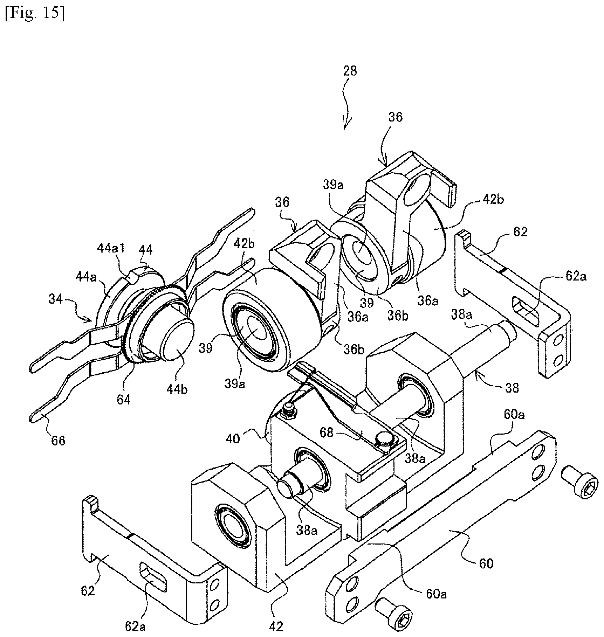

Next, a disc brake device according to the fourth embodiment of the present invention will be described with reference to Figs. 13 to 15. Incidentally, Fig. 13 is a view showing a side cross section of the disc brake device according to the fourth embodiment of the present invention, and Fig. 14 is a perspective view showing a configuration of a subunit in the disc brake device according to the fourth embodiment of the present invention. In addition, Fig. 15 is an exploded perspective view showing the subunit in the disc brake device according to the fourth embodiment of the present invention.

A disc brake device 10D according to the fourth embodiment is also configured based on the disc brake device 10B according to the second embodiment, and most of the configurations thereof can be used in common. Therefore, the portions having the same functions are denoted by the same reference signs in the drawings, and a detailed description thereof will be omitted.

As in the third embodiment, the difference between the disc brake device 10D according to the fourth embodiment and the disc brake device 10B according to the second embodiment is also the configuration of the power unit 26. Specifically, in addition to the two cam levers 36, the three support portions 38a of the camshaft 38 are provided.

In the fourth embodiment, the cam portion 39 is formed integrally with the cam lever 36, and the camshaft 38 is inserted through the through portion 39a provided in the cam portion 39. Therefore, the camshaft 38 serving as a rotation shaft can have a straight structure without a change in the diameter or eccentricity. According to the above configuration, the camshaft 38 can include the support portions 38a on both side portions of the cam lever 36 including the cam portion 39. Therefore, the cam holder 42 has a three-point support structure in which support is provided at a plurality of points positioned on both side portions of an arranging point of the cam lever 36, so that the proof stress of the camshaft 38 with respect to the axial force can be increased.

The cam portion 39 according to the fourth embodiment slides in a direction of an arrow d together with the cam holder 42 to generate a pressing force by pressing a reaction force receiver 60a of a base plate 60 arranged behind the cam holder 42. In addition, the base plate 60 is provided with guide plates 62. By inserting the camshaft 38 into a long holes 62a provided in each of the guide plates 62, when the cam portion 39 presses the reaction force receiver 60a, the cam holder 42 moves along a direction in which the long hole 62a is formed (the direction indicated by the arrow d).

The base plate 60 is fixed to the lower casing 48a included in the casing 48. Therefore, the base plate 60 and the guide plate 62 forms an outer holder arranged outside the cam holder 42. By fixing the outer holder to the casing 48, the subunit 28 can be fixed to the casing 48 or the body unit 14 (caliper body 16) by a configuration other than a shaft support.

In the disc brake device 10D according to the fourth embodiment, the piston unit 34 is provided with an auto-adjusting mechanism. The piston unit 34 is provided with an adjusting gear 64 that adjusts the protrusion amount of the inner piston 44 by rotation. As one specific configuration, for example, the inner piston 44 is configured by an inner piston main body 44a (not shown) and an adjuster portion 44b. Here, the adjuster portion is configured to be screwed into the inner piston main body 44a and to rotate with rotation of the adjusting gear 64. The inner piston main body 44a is prevented from rotating by a guide (not shown) arranged along a guide groove 44al, and the total length of the inner piston 44 is changed by rotation of the adjuster portion 44b. By the action, the protrusion amount of the inner piston 44 (inner piston main body 44a) from the outer piston 40 changes.

Further, the inner piston 44 is provided with a support spring 66 that is fixed with the guide plate 62 as a base point, and is configured such that a return amount after releasing the pressing force is constant. A limit value of a moving amount of the cam holder 42 by the cam portion 39 is longer than the return amount by the support spring 66. Therefore, in a case in which a pressing distance of the inner piston 44 by the cam holder 42 increases due to wear of the brake pad 18 (the claw-side pad 18a, the cylinder-side pad 18b), a gap is generated between the return amount of the inner piston 44 and a return amount of the cam holder 42 by the support spring 66.

The cam holder 42 is provided with an adjusting lever 68 that rotates the adjusting gear 64 using the gap between the return amount of the inner piston 44 and the return amount of the cam holder 42. Here, an engagement structure between the adjusting gear 64 and the adjusting lever 68 is a one-way gear structure in a direction in which the inner piston main body 44a protrudes, so that the protrusion amount of the inner piston main body 44a is compensated in accordance with a wear amount of the brake pad 18.

The power unit 26 having the above configuration can also be compatible with the power units 26 of the disc brake devices 10B, 10C according to the second and third embodiments described above by accommodating the casing 48 whose assembly portion is planned. In addition, the camshaft 38 and the piston unit 34 are arranged at the single cam holder 42, and the cam portion 39 presses the reaction force receiver 60a of the base plate 60 to move the cam holder 42 in a pushing direction of the inner piston 44, so that a bearing that holds the camshaft 38 is not required for the body unit 14 (caliper body 16) or the casing 48. Therefore, the configurations of the accommodating portion 16a and the casing 48 can be simplified, and processing cost can be reduced. Incidentally, other configurations are the same as those of the disc brake devices 10B, 10C according to the second and third embodiments described above.

### [Fifth Embodiment]

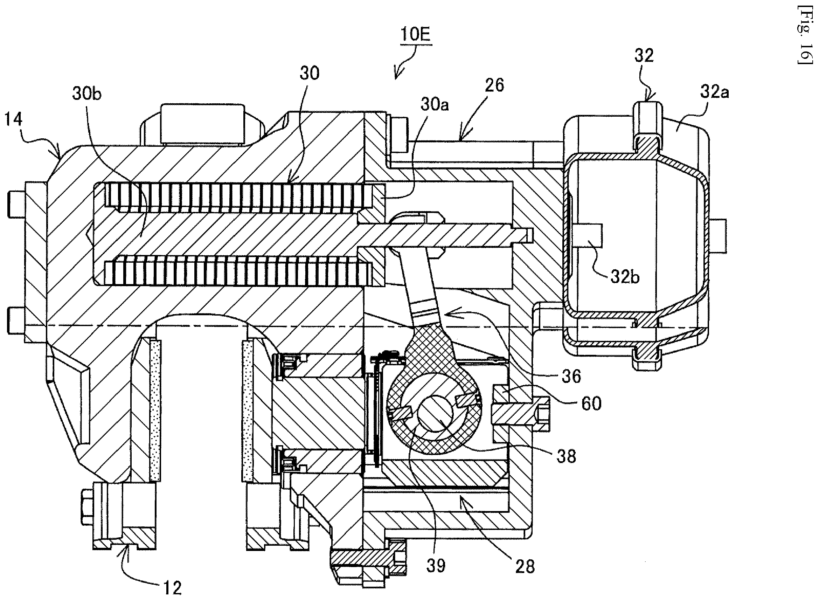

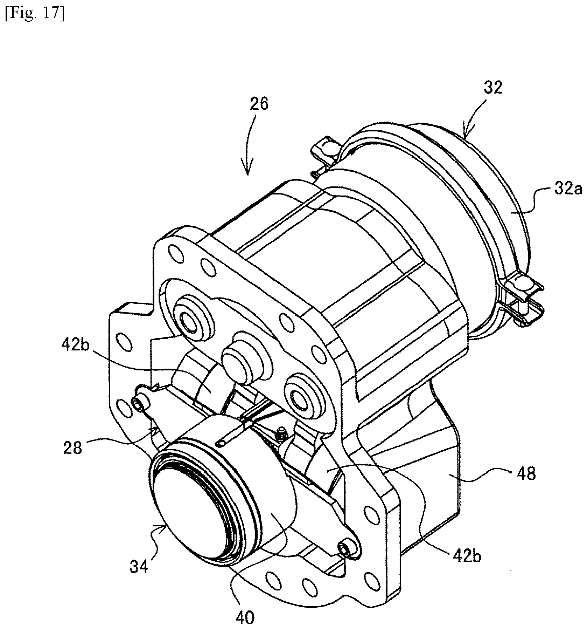

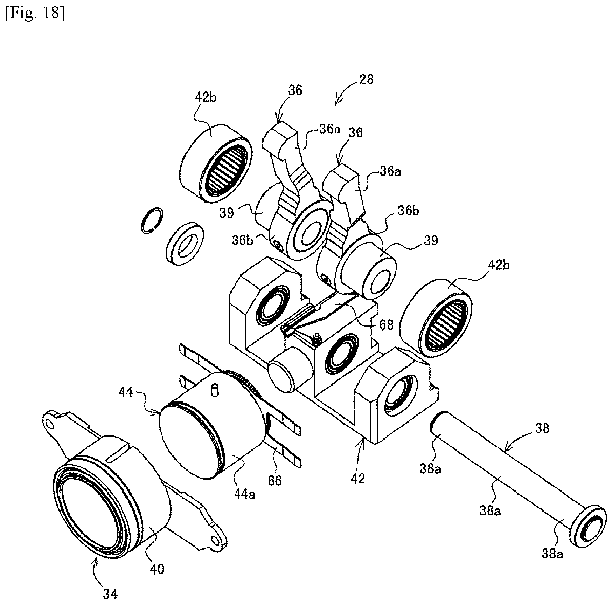

Next, a disc brake device according to a fifth embodiment of the present invention will be described with reference to Figs. 16 to 18. Incidentally, Fig. 16 is a view showing a side cross section (an upper side of a dash-dot line in the drawing is a cross section of an operation elastic body arrangement position, and a lower side of the dash-dot line is a cross section of a cam lever arrangement position) of the disc brake device according to the fifth embodiment of the present invention, and Fig. 17 is a perspective view showing a configuration of a power unit in the disc brake device according to the fifth embodiment of the present invention. In addition, Fig. 18 is an exploded perspective view showing a configuration of a subunit in the disc brake device according to the fifth embodiment of the present invention.

A disc brake device 10E according to the fifth embodiment is configured to apply a structure of the power unit 26 of the disc brake device 10D according to the fourth embodiment, based on the structure of the disc brake device 10A according to the first embodiment. Therefore, the portions having the same functions are denoted by the same reference signs in the drawings, and a detailed description thereof will be omitted.

First, the assembly unit 12 and the body unit 14 included in the disc brake device 10E can be the same as those of the disc brake device 10A according to the first embodiment. Next, the power unit 26 can share the basic configuration of the subunit 28 with the fourth embodiment. Specifically, the cam portion 39 integrated with each of the plurality of (two) cam levers 36, the camshaft 38 having the straight structure, and the cam holder 42 having the three support portions 38a, are used.

In this way, by standardizing the assembly portion, the power unit 26 having different structures can be assembled to the body unit 14 having different structures. Other configurations, functions, and effects are the same as those of the disc brake device 10A according to the first embodiment described above.

### [Others]

In the above embodiments, as a specific example of the replacement by unit, replacement and a compatibility of the power unit 26 have been mainly described. However, replacement of the assembly unit 12 and the body unit 14 can be performed in the same manner. Incidentally, the assembly unit 12 and the body unit 14 can be determined in a design by a form, a design, a size, or the like of the structure to be assembled or the like.

In addition, the present application is based on a Japanese Patent Application (Japanese Patent Application No. 2017-132940) filed July 6, 2017, the contents of which are incorporated herein by reference.

Here, characteristics of embodiments of the disc brake device according to the present invention described above are briefly summarized and listed below, respectively.
[1] A disc brake device (10, 10A, 10B, 10C, 10D, 10E) including:
   an assembly unit (12) including one or more components;
   a body unit (14) including one or more components and supported by the assembly unit (12); and
   a power unit (26) configured to generate at least one of pressing force and force to release pressing with respect to a brake pad (18) assembled to the body unit (14),
   wherein one or more types of the assembly unit (12), one or more types of the body unit (14), and one or more types of the power unit (26) are replaceable by unit.
[2] The disc brake device (10, 10A, 10B, 10C, 10D, 10E) according to the above [1],
   wherein an attachment portion of each unit is standardized.
[3] The disc brake device (10A, 10B, 10C, 10D, 10E) according to the above [1] or [2],
   wherein the power unit (26) includes
   a casing (48) including an assembly portion to the body unit (14),
   an actuator (32) assembled to the casing (48), and
   a subunit (28) accommodated inside the casing (48) and configured to amplify an operating force from the actuator (32).
[4] The disc brake device (10A, 10B, 10C, 10D, 10E) according to the above [3],
   wherein the subunit (28) includes
   a camshaft (38), and
   a cam lever (36) configured to rotate the camshaft (38), and
   wherein a cam portion (39) of the camshaft (38) is provided with a sliding member (42b) covering an entire circumference of the cam portion (39).
[5] The disc brake device (10A, 10B, 10C, 10D, 10E) according to the above [4],
   wherein a holder (cam holder 42) including a piston (piston unit 34) is inserted through the cam portion (39) of the camshaft (38).
[6] The disc brake device (10D, 10E) according to the above [4],
   wherein the camshaft (38) and a piston (piston unit 34) are arranged in a single holder (cam holder 42), and the cam portion (39) presses a reaction force receiver (60a) inside the casing (48) so as to move the holder (cam holder 42) in a pushing direction of the piston (inner piston 44).
[7] The disc brake device (10D, 10E) according to the above [6], further including:
   an outer holder (base plate 60 and guide plate 62) fixed to the casing (48) on an outer periphery of the holder (cam holder 42),
   wherein the reaction force receiver (60a) is configured by the outer holder (base plate 60 and guide plate 62).
[8] The disc brake device (10B, 10C, 10D, 10E) according to any one of the above [4] to [7],
   wherein a plurality of the cam levers (36) are arranged with respect to the camshaft (38).
[9] The disc brake device (10D, 10E) according to any one of the above [4] to [8],
   wherein the camshaft (38) includes support portions (38a) at a plurality of points positioned on both side portions of an arranging point of the cam lever (36).

### Industrial Applicability

According to the disc brake device of the present invention, it is possible to improve the accuracy of the maintenance or repair and to shorten the time required for the maintenance or repair in a disc brake device having a power mechanism other than hydraulic pressure.

### Reference Signs List

10, 10A, 10B, 10C, 10D, 10E disc brake device
12 assembly unit
12A assembly unit group
14 body unit
14A body unit group
16 caliper body
16a accommodating portion
18 brake pad
18a claw-side pad
18b cylinder side pad
20 cylinder portion
20a cylinder
22 back portion
22a accommodating portion
24 claw portion
26 power unit
26A power unit group
28 subunit
30 operation elastic body
30a spring holder
30b spring guide
32 actuator
32a air cylinder
32b direct acting rod
34 piston unit (piston)
36 cam lever
36a lever portion
36b engaging portion
36bl through portion
36b2 fixing hole
38 camshaft
38a support portion
38A shaft piece
38A1 through hole
38b groove
38c retaining ring
39 cam portion
39a through portion
39b hole
40 outer piston
40a through hole
42 cam holder (holder)
42a holding portion
42b sliding member
44 inner piston
44a inner piston main body
44a1 guide groove
44b adjuster portion
46 sliding member
48 casing
48a lower casing
48b upper casing
50 reinforcing member
50a through hole
52 connecting shaft
54 stopper plate
56 clevis
58 rod
60 base plate (outer holder)
60a reaction force receiver
62 guide plate (outer holder)
62a long hole
64 adjusting gear
66 support spring
68 adjusting lever

## Claims

1. A disc brake device comprising:
an assembly unit including one or more components;
a body unit including one or more components and supported by the assembly unit; and
a power unit configured to generate at least one of pressing force and force to release pressing with respect to a brake pad assembled to the body unit,
wherein one or more types of the assembly unit, one or more types of the body unit, and one or more types of the power unit are replaceable by unit.

2. The disc brake device according to claim 1,
wherein an attachment portion of each unit is standardized.

3. The disc brake device according to claim 1 or 2,
wherein the power unit includes
a casing including an assembly portion to the body unit,
an actuator assembled to the casing, and
a subunit accommodated inside the casing and configured to amplify an operating force from the actuator.

4. The disc brake device according to claim 3,
wherein the subunit includes
a camshaft, and
a cam lever configured to rotate the camshaft, and
wherein a cam portion of the camshaft is provided with a sliding member covering an entire circumference of the cam portion.

5. The disc brake device according to claim 4,
wherein a holder including a piston is inserted through the cam portion of the camshaft.

6. The disc brake device according to claim 4,
wherein the camshaft and a piston are arranged in a single holder, and the cam portion presses a reaction force receiver inside the casing so as to move the holder in a pushing direction of the piston.

7. The disc brake device according to claim 6, further comprising:
an outer holder fixed to the casing on an outer periphery of the holder,
wherein the reaction force receiver is configured by the outer holder.

8. The disc brake device according to any one of claims 4 to 7,
wherein a plurality of the cam levers are arranged with respect to the camshaft.

9. The disc brake device according to any one of claims 4 to 8,
wherein the camshaft includes support portions at a plurality of points positioned on both side portions of an arranging point of the cam lever.
